# FASCICULE DE BREVET EUROPEEN

(11) **EP 3 408 990 B1**
(45) Date de publication et mention de la délivrance du brevet: **11.03.2020**
(21) Numéro de dépôt: 17702422.1
(22) Date de dépôt: 04.01.2017
(51) Int. Cl.: H04L 29/06, H04L 29/08, H04L 12/40, H04L 29/14, H04L 12/46

(54) **DISPOSITIF DE PASSERELLE POUR UN SYSTÈME DE COMMUNICATION EMBARQUÉ D'UN VÉHICULE AUTOMOBILE**
GATEWAY-VORRICHTUNG FÜR EIN BORDKOMMUNIKATIONSSYSTEM EINES KRAFTFAHRZEUGES
GATEWAY DEVICE FOR AN ON-BOARD COMMUNICATION SYSTEM OF A MOTOR VEHICLE

(30) Priorité: 28.01.2016 FR 1650670
(43) Date de publication de la demande: 05.12.2018
(73) Titulaire: RENAULT s.a.s., 92100 Boulogne-Billancourt (FR)
(72) Inventeur: DANG VAN NHAN, Christophe, 94800 Villejuif (FR)
(86) Numéro de dépôt international: PCT/FR2017/050011
(87) Numéro de publication internationale: WO 2017/129873

(56) Documents cités:
- WO-A1-2010/070218
- FR-A1- 3 002 401
- FR-A3- 2 933 054
- US-A1- 2010 299 742

## Description

La présente invention concerne un dispositif de passerelle interconnectant de manière bidirectionnelle deux réseaux embarqués de communication dans un véhicule automobile.

Le document de brevet US2010/0299742A1 décrit une passerelle bidirectionnelle avec un niveau de sécurité augmenté pour connecter deux réseaux de communication de natures différentes en termes de sécurité. Un chemin de réseau à basse sécurité vers réseau à haute sécurité comporte un lien à basse vitesse avec un protocole différent de celui utilisé dans le réseau à basse sécurité, et différent de celui utilisé dans le réseau à haute sécurité.

Comme cela est connu en soi, dans un véhicule automobile, de nombreuses fonctionnalités sont pilotées électroniquement à l'aide de calculateurs. Pour des raisons de sécurité ou pour des raisons de simplicité de conception, un véhicule automobile est usuellement équipé de plusieurs réseaux de communication, par exemple de type CAN (pour « Controller Area Network »), LIN (pour « Local Interconnect Network ») ou Ethernet automobile, connectés entre eux par des passerelles. En particulier, pour certaines applications nécessitant un certain degré de tolérance aux fautes, les réseaux de communication sont redondés, afin de garantir qu'au moins une partie des différents calculateurs qui y sont connectés puissent encore communiquer en cas de panne de réseau.

En mode nominal, un dispositif de passerelle est conçu pour permettre de transférer des messages d'un réseau de communication à un autre, dans les deux sens. Aussi, une défaillance du dispositif de passerelle est susceptible de causer la panne simultanée des deux réseaux de communication. Un exemple de défaillance peut relever d'un comportement dit « babbling idiot » selon une terminologie anglo-saxonne, qui se manifeste par l'émission de messages à des instants aléatoires et incohérents, ou même de façon continue, sur les deux réseaux, qui monopolisent l'utilisation de ces derniers et empêchent les autres calculateurs qui y sont connectés de communiquer entre eux.

Afin de répondre aux problèmes soulevés par ce type de défaillance dans les réseaux de communication pour systèmes embarqués, il est connu de mettre en œuvre une procédure de supervision des nœuds présents sur le réseau à l'aide d'un dispositif dit « bus guardian » selon une terminologie anglo-saxonne. Ainsi, le document de brevet US7583692 fait connaître un tel dispositif dans le cadre des réseaux temps réels embarqués dans les véhicules automobiles utilisant le protocole TTP. Le dispositif décrit dans ce document est basé sur l'utilisation d'un planning de communication, qui affecte à des nœuds de réseau communiquant entre eux, des intervalles de temps pour l'accès au réseau.

Le document de brevet US6934775 décrit un dispositif similaire au dispositif « bus guardian », mais appliqué à un réseau asynchrone auquel sont ajoutés des mécanismes de synchronisation.

Le document de brevet KR100976710 décrit un dispositif de passerelle entre des réseaux synchrone et asynchrone, qui fait appel à une redondance de contrôleurs de communication et à une interface s'apparentant à un dispositif de « bus guardian » implémentée en logique programmable.

Enfin, le document de brevet US8739268 décrit un dispositif de passerelle sécurisé pour éviter les cyber-attaques avec des mécanismes complexes de filtrage.

Ainsi, il existe des moyens pour rendre le dispositif de passerelle tolérant aux fautes, afin de s'assurer qu'il ne monopolise pas de façon indue l'un ou l'autre des réseaux de communication auquel il est connecté. Cependant, ces moyens sont complexes et coûteux. Un autre inconvénient est leur rigidité, dans la mesure où ils reposent sur des mécanismes figés tels que des plannings de communication. En outre, le déploiement de ces moyens n'est pas souhaitable lorsque l'on peut admettre la panne d'un réseau de communication, ce qui est précisément le cas dans les architectures redondées évoquées plus haut, dans la mesure où ces architectures sont justement conçues pour garantir que les nœuds du réseau puisse communiquer entre eux sur l'un des réseaux redondés en cas de panne sur l'autre des réseaux redondés.

Aussi, il existe un besoin pour un dispositif de passerelle pour un système de communication embarqué, en particulier dans un véhicule automobile où les réseaux de communication sont redondés, qui soit tolérant aux fautes et exempt des limitations précédemment évoquées.

A cette fin, la présente invention concerne un dispositif de passerelle selon la revendication indépendante 1.

Selon un premier mode de réalisation, ladite première interface de bus comprend un premier circuit d'interface de bus connecté audit premier processeur local par l'intermédiaire de sa seule ligne de réception de sorte à pouvoir être utilisé uniquement en mode de réception, et un second circuit d'interface de bus connecté audit deuxième processeur local au moins par l'intermédiaire de sa ligne d'émission.

De préférence, ledit second circuit d'interface de bus de ladite première interface de bus est connecté audit deuxième processeur local par l'intermédiaire de sa seule ligne d'émission de sorte à pouvoir être utilisé uniquement en mode d'émission.

En variante, ledit second circuit d'interface de bus de ladite première interface de bus est connecté audit deuxième processeur local par l'intermédiaire de sa ligne d'émission et de sa ligne de réception, de sorte à pouvoir être utilisé en mode émission et en mode réception.

Selon le premier mode de réalisation, ladite deuxième interface de bus comprend un premier circuit d'interface de bus connecté audit premier processeur local au moins par l'intermédiaire de sa ligne d'émission et un second circuit d'interface de bus connecté audit deuxième processeur local par l'intermédiaire de sa seule ligne de réception de sorte à pouvoir être utilisé uniquement en mode de réception.

De préférence, ledit premier circuit d'interface de bus de ladite deuxième interface de bus est connecté audit premier processeur local par l'intermédiaire de sa seule ligne d'émission de sorte à pouvoir être utilisé uniquement en mode d'émission.

En variante, ledit premier circuit d'interface de bus de ladite deuxième interface de bus est connecté audit premier processeur local par l'intermédiaire de sa ligne d'émission et de sa ligne de réception, de sorte à pouvoir être utilisé en mode émission et en mode réception.

Selon un second mode de réalisation, ladite première interface de bus est constituée d'un circuit d'interface de bus unique, ladite ligne de réception de ladite première interface de bus étant connectée au moins audit premier processeur local et ladite ligne d'émission de ladite première interface de bus étant connectée seulement audit deuxième processeur local.

De préférence, ledit circuit d'interface de bus unique de ladite première interface de bus est connecté audit deuxième processeur local par l'intermédiaire de sa seule ligne d'émission de sorte à pouvoir être utilisé uniquement en mode d'émission.

En variante, ledit circuit d'interface de bus unique de ladite première interface de bus est connecté audit deuxième processeur local par l'intermédiaire de sa ligne d'émission et de sa ligne de réception, de sorte à pouvoir être utilisé en mode émission et en mode réception.

Selon ce second mode de réalisation, ladite deuxième interface de bus est constituée d'un circuit d'interface de bus unique, ladite ligne de réception de ladite deuxième interface de bus étant connectée au moins audit deuxième processeur local et ladite ligne d'émission de ladite deuxième interface de bus étant connectée seulement audit premier processeur local.

De préférence, ledit circuit d'interface de bus unique de ladite deuxième interface de bus est connecté audit premier processeur local par l'intermédiaire de sa seule ligne d'émission de sorte à pouvoir être utilisé uniquement en mode d'émission.

En variante, ledit circuit d'interface de bus unique de ladite deuxième interface de bus est connecté audit premier processeur local par l'intermédiaire de sa ligne d'émission et de sa ligne de réception, de sorte à pouvoir être utilisé en mode émission et en mode réception.

De préférence, le premier et le deuxième réseau de communication sont choisis parmi l'un d'un réseau CAN, LIN ou Ethernet automobile.

L'invention concerne également un véhicule automobile comprenant au moins un premier réseau de communication et un deuxième réseau de communication embarqués et un dispositif de passerelle tel que décrit ci-dessus apte à être connecté aux dits premier et deuxième réseaux de communication embarqués.

D'autres particularités et avantages de l'invention ressortiront à la lecture de la description faite ci-après d'un mode de réalisation particulier de l'invention, donné à titre indicatif mais non limitatif, en référence aux figures suivantes dans lesquelles :
- la figure 1 est une représentation schématique d'un dispositif de passerelle conforme à l'invention, selon un premier mode de réalisation ;
- la figure 2 est une représentation schématique d'un dispositif de passerelle conforme à l'invention, selon un deuxième mode de réalisation ;
- la figure 3 est une représentation schématique d'une variante du dispositif de passerelle conforme à l'invention, selon le deuxième mode de réalisation.

L'invention va être décrite dans le cadre d'un véhicule automobile équipé de plusieurs réseaux CAN connectés entre eux par des passerelles, mais s'applique de manière générale à tous types de réseau de communication embarqué, par exemple de type LIN ou Ethernet automobile.

Ainsi, en référence aux figures, un premier réseau CAN 10 de véhicule automobile est connecté à un deuxième réseau CAN 12 au travers d'un dispositif de passerelle 14. Le dispositif de passerelle 14 comprend une première interface physique de bus 16 reliée au premier réseau CAN 10 par l'intermédiaire d'une paire de lignes de bus complémentaires CAN-H et CAN-L du premier réseau CAN 10 et une deuxième interface physique de bus 18 reliée au deuxième réseau CAN 12 par l'intermédiaire d'une paire de lignes de bus complémentaires CAN-H et CAN-L du deuxième réseau CAN 12. Chacune des première et deuxième interfaces de bus 16 et 18 comprend une ligne de réception RX et une ligne d'émission TX pour recevoir et émettre des messages depuis et vers les lignes de bus complémentaires du premier et du deuxième réseau CAN.

Conformément à l'invention, le dispositif de passerelle 14 comprend un premier processeur local 20, par exemple un système à microprocesseur, connecté entre les première et deuxième interfaces de bus 16 et 18, agencé exclusivement pour transférer des messages reçus sur la ligne de réception RX de la première interface de bus 16 avec le premier réseau CAN 10 vers la ligne d'émission TX de la deuxième interface de bus 18 avec le deuxième réseau CAN 12. De la sorte, ce premier système à microprocesseur 20 est conçu pour assurer une fonction de passerelle unidirectionnelle entre le premier réseau CAN 10 et le deuxième réseau CAN 12. Il permet donc uniquement d'assurer le transfert de données du premier réseau CAN 10 vers le deuxième réseau CAN 12.

Le dispositif de passerelle de l'invention comprend également un deuxième processeur local 22, par exemple un système microprocesseur, indépendant du premier système à microprocesseur 20, connecté entre les première et deuxième interfaces de bus 16 et 18, et agencé exclusivement pour transférer des messages reçus sur la ligne de réception RX de la deuxième interface de bus 18 avec le deuxième réseau CAN 12 vers la ligne d'émission TX de la première interface de bus 16 avec le premier réseau CAN 10. De la sorte, ce deuxième système à microprocesseur 22 est conçu pour assurer une fonction de passerelle unidirectionnelle entre le deuxième réseau CAN 12 et le premier réseau CAN 10. Il permet donc uniquement d'assurer le transfert de données du deuxième réseau CAN 12 vers le premier réseau CAN 10.

Autrement dit, le dispositif de passerelle 14 de l'invention permet de réaliser une passerelle bidirectionnelle entre les premier et deuxième réseaux CAN 10 et 12, en juxtaposant deux passerelles unidirectionnelles respectivement du premier réseau CAN 10 vers le deuxième réseau CAN 12 et du deuxième réseau CAN 12 vers le premier réseau CAN 10.

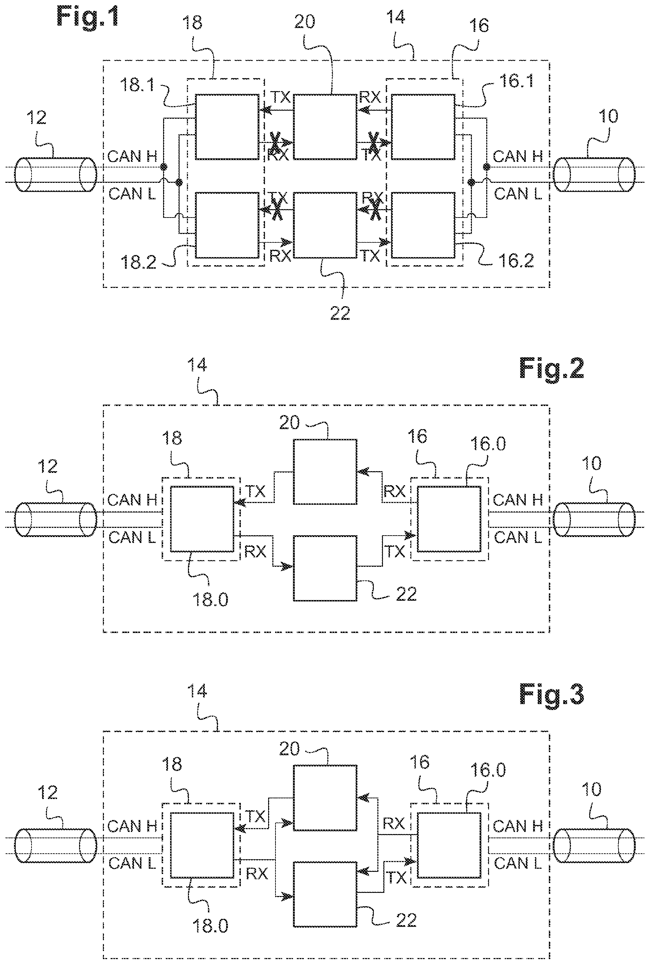

Conformément au premier mode de réalisation illustré à la figure 1, la première interface de bus 16 connectée à la paire de lignes de bus complémentaires du premier réseau CAN 10 comprend un premier circuit d'interface de bus 16.1 connecté au premier système à microprocesseur 20 par l'intermédiaire de sa seule ligne de réception RX, et la deuxième interface de bus 18 connectée à la paire de lignes de bus complémentaires du deuxième réseau CAN 12 comprend un premier circuit d'interface de bus 18.1 connecté au premier système à microprocesseur 20 au moins par l'intermédiaire de sa ligne d'émission TX. Autrement dit, le premier circuit d'interface de bus 16.1 de la première interface de bus 16 avec le premier réseau CAN 10 est utilisé uniquement en mode réception, car seule la ligne de réception RX est utilisée, et le premier circuit d'interface de bus 18.1 de la deuxième interface de bus 18 avec le deuxième réseau CAN 12 est utilisé au moins en mode émission. Par ailleurs, la ligne d'émission TX entre le premier système à microprocesseur 20 et le premier circuit d'interface de bus 16.1 de la première interface de bus 16 avec le premier réseau CAN 10 est coupée. Ainsi, cette première passerelle unidirectionnelle du premier réseau CAN 10 vers le deuxième réseau CAN 12, composée du premier circuit d'interface de bus 16.1 de la première interface de bus 16, du premier circuit d'interface de bus 18.1 de la deuxième interface de bus 18 et du premier système à microprocesseur 20 connecté aux deux circuits d'interface 16.1 et 18.1, comporte une barrière physique qui empêche le système à microprocesseur 20 d'émettre des données sur le bus du premier réseau CAN 10.

Ainsi, en cas de défaillance de cette première passerelle unidirectionnelle du premier réseau CAN 10 vers le deuxième réseau CAN 12, il est possible que celle-ci sature le deuxième réseau CAN 12. En revanche, il est impossible qu'elle puisse saturer le premier réseau CAN 10, du fait que cette passerelle présente une barrière physique empêchant son système à microprocesseur 20 d'écrire sur le bus du premier réseau CAN 10.

S'agissant de cette première passerelle unidirectionnelle du premier réseau CAN 10 vers le deuxième réseau CAN 12, on notera que c'est le barrage au niveau de la ligne d'émission TX entre le premier système à microprocesseur 20 et le premier circuit 16.1 de la première interface de bus 16 avec le premier réseau CAN 10, qui est essentielle pour empêcher le système à microprocesseur 20 d'écrire sur le bus du premier réseau CAN 10, tandis que la ligne de réception RX en amont de cette ligne d'émission coupée, soit la ligne de réception RX du premier circuit 18.1 de la deuxième interface de bus 18 connectée entre ce premier circuit et le système à microprocesseur 20, peut être conservée, de façon à pouvoir permettre au système à microprocesseur 20 de relire sur le bus du deuxième réseau CAN 12 des données précédemment émises sur ce bus pour s'assurer d'une bonne transmission de ces données. Si une telle procédure de contrôle n'était pas utile, la ligne de réception RX connectée entre le premier circuit 18.1 de la deuxième interface de bus 18 et le système à microprocesseur 20 peut avantageusement être supprimée.

Toujours conformément au premier mode de réalisation illustré à la figure 1, on va maintenant décrire la réalisation de la deuxième passerelle unidirectionnelle du deuxième réseau CAN 12 vers le premier réseau CAN 10. Ainsi, la deuxième interface de bus 18 connectée à la paire de lignes de bus complémentaires du deuxième réseau CAN 12 comprend un second circuit d'interface de bus 18.2 connecté au deuxième système à microprocesseur 22 par l'intermédiaire de sa seule ligne de réception RX, et la première interface de bus 16 connectée à la paire de lignes de bus complémentaires du premier réseau CAN 10 comprend un second circuit d'interface de bus 16.2 connecté au deuxième système à microprocesseur 22 au moins par l'intermédiaire de sa ligne d'émission TX. Autrement dit, le second circuit d'interface de bus 18.2 de la deuxième interface de bus 18 avec le deuxième réseau CAN 12 est utilisé uniquement en mode réception, car seule la ligne de réception RX est utilisée, et le second circuit d'interface de bus 16.2 de la première interface de bus 16 avec le premier réseau CAN 10 est utilisé au moins en mode émission. Par ailleurs, la ligne d'émission TX entre le deuxième système à microprocesseur 22 et le second circuit d'interface de bus 18.2 de la deuxième interface de bus 18 avec le deuxième réseau CAN 12 est coupée. Ainsi, cette deuxième passerelle unidirectionnelle du deuxième réseau CAN 12 vers le premier réseau CAN 10, composée du second circuit d'interface de bus 18.2 de la deuxième interface de bus 18, du second circuit d'interface de bus 16.2 de la première interface de bus 16 et du deuxième système à microprocesseur 22 connecté aux deux circuits d'interface 18.2 et 16.2, comporte une barrière physique qui empêche le système à microprocesseur 22 d'émettre des données sur le bus du deuxième réseau CAN 12.

Ainsi, en cas de défaillance de cette deuxième passerelle unidirectionnelle du deuxième réseau CAN 12 vers le premier réseau CAN 10, il est possible que celle-ci sature le premier réseau CAN 10. En revanche, il est impossible qu'elle puisse saturer le deuxième réseau CAN 12, du fait que cette passerelle présente une barrière physique empêchant son système à microprocesseur 22 d'écrire sur le bus du deuxième réseau CAN 12.

S'agissant de cette deuxième passerelle unidirectionnelle, on notera que c'est le barrage au niveau de la ligne d'émission TX entre le deuxième système à microprocesseur 22 et le second circuit 18.2 de la deuxième interface de bus 18 avec le deuxième réseau CAN 12, qui est essentielle pour empêcher le système à microprocesseur 22 d'écrire sur le bus du deuxième réseau CAN 12, tandis que la ligne de réception RX en amont de cette ligne d'émission coupée, soit la ligne de réception RX du second circuit 16.2 de la première interface de bus 16 connectée entre ce premier circuit et le système à microprocesseur 22, peut être conservée, de façon à pouvoir permettre au système à microprocesseur 22 de relire sur le bus du premier réseau CAN 10 des données précédemment émises sur ce bus pour s'assurer d'une bonne transmission de ces données. En variante, si une telle procédure de contrôle n'était pas utile, la ligne de réception RX connectée entre le second circuit 16.2 de la première interface de bus 16 et le système à microprocesseur 22 peut avantageusement être supprimée.

Les deux passerelles unidirectionnelles pourront être totalement indépendantes, à savoir logées chacune dans son propre boîtier. Toutefois, elles seront préférentiellement hébergées dans un même boîtier, en conservant une indépendance fonctionnelle, mais en partageant certains ressources telles que le boîtier, le circuit imprimé, les connecteurs, l'alimentation. Cette dernière variante en fait une solution particulièrement économique.

Comme expliqué ci-dessus, la première passerelle unidirectionnelle du premier réseau CAN 10 vers le deuxième réseau CAN 12 peut saturer le deuxième réseau CAN 12 mais pas le premier réseau CAN 10, tandis que la deuxième passerelle unidirectionnelle du deuxième réseau CAN 12 vers le premier réseau CAN 10 peut saturer le premier réseau CAN 10 mais pas le deuxième réseau CAN 12. De ce fait, une simple défaillance dans l'ensemble du dispositif de passerelle 14 de l'invention ne peut saturer simultanément les deux réseaux CAN 10 et 12, du fait que le risque de défaillance simultanée des deux systèmes à microprocesseur 20 et 22 respectivement des première et deuxième passerelles est très faible. Aussi, le dispositif de passerelle 14 est-il dit non immobilisant.

En outre, le dispositif de passerelle de l'invention présente une avantageuse simplicité puisqu'il repose sur le principe de dissocier les fonctions de passerelle respectivement du premier réseau CAN vers le deuxième réseau CAN et du deuxième réseau CAN vers le premier réseau CAN, en les hébergeant dans deux systèmes à microprocesseur différents. Ce faisant, il n'implique pas de développer de complexes mécanismes de surveillance et de traitement des défaillances. Avantageusement encore, aucune de ces deux fonctions de passerelle ne requiert d'être particulièrement sécurisée, dans la mesure où l'on admet que l'une ou l'autre de ces deux fonctions puisse défaillir en ne saturant qu'un seul des deux réseaux CAN.

Ces avantages de simplicité réduisent le coût de développement du dispositif de passerelle et le coût du dispositif lui-même, et réduisent d'autant l'effort de démonstration de l'atteinte de l'objectif de sécurité.

En outre, ce dispositif de passerelle présente une grande flexibilité et une grande évolutivité. Ainsi, lorsqu'il s'avère nécessaire de faire évoluer la liste des messages à faire transiter par ce dispositif de passerelle, une simple mise à jour de la fonctionnalité nominale est nécessaire, sans se soucier d'une quelconque mise à jour de dispositifs de sécurité, comme c'est le cas avec les mécanismes de type « bus guardian », qui nécessitent une mise à jour en dur du planning de transmission des messages.

La figure 2 concerne un deuxième mode de réalisation du dispositif de passerelle de l'invention, dans lequel les interfaces physiques de bus avec les premier et deuxième réseaux CAN sont partagées par les deux fonctions de passerelle unidirectionnelle. Ainsi, en référence à la figure 2, l'interface de bus 16 couplée au premier réseau CAN 10 comporte un circuit d'interface de bus unique 16.0 connecté au premier réseau CAN, dont la ligne de réception RX est connectée au moins au premier système à microprocesseur 20 assurant la fonction de passerelle unidirectionnelle du premier réseau CAN 10 vers le deuxième réseau CAN 12, et dont la ligne d'émission TX est connectée seulement au deuxième système à microprocesseur 22 assurant la fonction de passerelle unidirectionnelle dudit deuxième réseau CAN 12 vers le premier réseau CAN 10.

Par ailleurs, l'interface de bus 18 couplée au deuxième réseau CAN 12 comporte un circuit d'interface de bus unique 18.0 connecté au deuxième réseau CAN, dont la ligne de réception RX est connectée au moins au deuxième système à microprocesseur 22 assurant la fonction de passerelle unidirectionnelle du deuxième réseau CAN 12 vers le premier réseau CAN 10, et dont la ligne d'émission TX est connectée seulement au premier système à microprocesseur 20 assurant la fonction de passerelle unidirectionnelle dudit premier réseau CAN 10 vers le deuxième réseau CAN 12. Ainsi, le caractère unidirectionnel des deux fonctions de passerelle est conservé et le dispositif de passerelle 14 dans son ensemble reste de type non immobilisant. En effet, le dispositif de passerelle met en œuvre deux unités de traitement physiquement indépendantes, et donc distinctes l'une de l'autre, à savoir les deux systèmes à microprocesseur 20 et 22, pour chacune des deux fonctions de passerelle respectivement.

Alors que la figure 2 illustre le deuxième mode de réalisation du dispositif de passerelle dans lequel chaque connexion RX est reliée à un système à microprocesseur distinct, la figure 3 illustre le dispositif de passerelle de la figure 2 dans lequel chaque connexion RX est reliée aux deux systèmes à microprocesseurs.

Ainsi, le système à microprocesseur 20 peut transmettre les trames reçues du réseau 10 via la connexion RX qui le relie au circuit unique 16.0 d'interface de bus, à destination du réseau 12 via la connexion TX qui le relie au circuit unique 18.0 d'interface de bus. Le système à microprocesseur 20 peut contrôler la bonne transmission des trames à destination du réseau 12 au moyen de la connexion RX qui le relie au circuit unique 18.0 d'interface de bus.

De même, le système à microprocesseur 22 peut transmettre les trames reçues du réseau 12 via la connexion RX qui le relie au circuit unique 18.0 d'interface de bus, à destination du réseau 10 via la connexion TX qui le relie au circuit unique 16.0 d'interface de bus. Le microprocesseur 22 peut alors contrôler la bonne transmission des trames à destination du réseau 10 au moyen de la connexion RX qui le relie au circuit unique 16.0 d'interface de bus.

## Revendications

1. Dispositif de passerelle (14) apte à interconnecter un premier bus d'un premier réseau de communication (10) d'un véhicule automobile et un deuxième bus d'un deuxième réseau de communication (12) du véhicule automobile, les deux réseaux de communication (10, 12) étant deux réseaux de communication redondés, ledit dispositif de passerelle comprenant une première interface de bus (16) couplée audit premier bus comprenant une ligne de réception (RX) et une ligne d'émission (TX) pour respectivement recevoir et émettre des messages depuis et vers ledit premier bus et une deuxième interface de bus (18) couplée audit deuxième bus comprenant une ligne de réception (RX) et une ligne d'émission (TX) pour respectivement recevoir et émettre des messages depuis et vers ledit deuxième bus, un premier processeur local (20) connecté aux dites deux interfaces de bus, ledit premier processeur local étant conçu exclusivement pour transférer des messages reçus sur ladite ligne de réception (RX) de ladite première interface de bus (16) vers ladite ligne d'émission (TX) de ladite deuxième interface de bus (18) de sorte à assurer une fonction de première passerelle unidirectionnelle entre ledit premier réseau (10) et ledit deuxième réseau (12), et un deuxième processeur local (22), indépendant dudit premier processeur local (20), ledit deuxième processeur local (22) étant conçu exclusivement pour transférer des messages reçus sur ladite ligne de réception (RX) de ladite deuxième interface de bus (18) vers ladite ligne d'émission (TX) de ladite première interface de bus (16) de sorte à assurer une fonction de deuxième passerelle unidirectionnelle entre ledit deuxième réseau (12) et ledit premier réseau (10).

2. Dispositif selon la revendication 1, **caractérisé en ce que** ladite première interface de bus (16) comprend un premier circuit d'interface de bus (16.1) connecté audit premier processeur local (20) par l'intermédiaire de sa seule ligne de réception de sorte à pouvoir être utilisé uniquement en mode de réception, et un second circuit d'interface de bus (16.2) connecté audit deuxième processeur local (22) au moins par l'intermédiaire de sa ligne d'émission.

3. Dispositif selon la revendication 2, **caractérisé en ce que** ledit second circuit d'interface de bus (16.2) de ladite première interface de bus (16) est connecté audit deuxième processeur local (22) par l'intermédiaire de sa seule ligne d'émission de sorte à pouvoir être utilisé uniquement en mode d'émission.

4. Dispositif selon la revendication 2, **caractérisé en ce que** ledit second circuit d'interface de bus (16.2) de ladite première interface de bus (16) est connecté audit deuxième processeur local (22) par l'intermédiaire de sa ligne d'émission et de sa ligne de réception, de sorte à pouvoir être utilisé en mode émission et en mode réception.

5. Dispositif selon la revendication 1 ou 2, **caractérisé en ce que** ladite deuxième interface de bus (18) comprend un premier circuit d'interface de bus (18.1) connecté audit premier processeur local (20) au moins par l'intermédiaire de sa ligne d'émission et un second circuit d'interface de bus (18.2) connecté audit deuxième processeur local (22) par l'intermédiaire de sa seule ligne de réception de sorte à pouvoir être utilisé uniquement en mode de réception.

6. Dispositif selon la revendication 5, **caractérisé en ce que** ledit premier circuit d'interface de bus (18.1) de ladite deuxième interface de bus (18) est connecté audit premier processeur local (20) par l'intermédiaire de sa seule ligne d'émission de sorte à pouvoir être utilisé uniquement en mode d'émission.

7. Dispositif selon la revendication 5, **caractérisé en ce que** ledit premier circuit d'interface de bus (18.1) de ladite deuxième interface de bus (18) est connecté audit premier processeur local (20) par l'intermédiaire de sa ligne d'émission et de sa ligne de réception, de sorte à pouvoir être utilisé en mode émission et en mode réception.

8. Dispositif selon la revendication 1, **caractérisé en ce que** ladite première interface de bus (16) est constituée d'un circuit d'interface de bus unique (16.0), ladite ligne de réception de ladite première interface de bus étant connectée au moins audit premier processeur local (20) et ladite ligne d'émission de ladite première interface de bus étant connectée seulement audit deuxième processeur local (22).

9. Dispositif selon la revendication 8, **caractérisé en ce que** ledit circuit d'interface de bus unique (16.0) de ladite première interface de bus (16) est connecté audit deuxième processeur local (22) par l'intermédiaire de sa seule ligne d'émission de sorte à pouvoir être utilisé uniquement en mode d'émission.

10. Dispositif selon la revendication 8, **caractérisé en ce que** ledit circuit d'interface de bus unique (16.0) de ladite première interface de bus (16) est connecté audit deuxième processeur local (22) par l'intermédiaire de sa ligne d'émission et de sa ligne de réception, de sorte à pouvoir être utilisé en mode émission et en mode réception.

11. Dispositif selon la revendication 1 ou 8, **caractérisé en ce que** ladite deuxième interface de bus (18) est constituée d'un circuit d'interface de bus unique (18.0), ladite ligne de réception de ladite deuxième interface de bus étant connectée au moins audit deuxième processeur local (22) et ladite ligne d'émission de ladite deuxième interface de bus étant connectée seulement audit premier processeur local (20).

12. Dispositif selon la revendication 11, **caractérisé en ce que** ledit circuit d'interface de bus unique (18.0) de ladite deuxième interface de bus (18) est connecté audit premier processeur local (20) par l'intermédiaire de sa seule ligne d'émission de sorte à pouvoir être utilisé uniquement en mode d'émission.

13. Dispositif selon la revendication 11, **caractérisé en ce que** ledit circuit d'interface de bus unique (18.0) de ladite deuxième interface de bus (18) est connecté audit premier processeur local (20) par l'intermédiaire de sa ligne d'émission et de sa ligne de réception, de sorte à pouvoir être utilisé en mode émission et en mode réception.

14. Dispositif selon la revendication 1, **caractérisé en ce que** ledit premier processeur local (20) est connecté à ladite ligne de réception (RX) de ladite première interface de bus (16) et uniquement à ladite ligne d'émission (TX) de ladite deuxième interface de bus (18) pour exclusivement transférer des messages reçus sur ladite ligne de réception (RX) de ladite première interface de bus (16) vers ladite ligne d'émission (TX) de ladite deuxième interface de bus (18) de sorte à assurer une fonction de première passerelle unidirectionnelle entre ledit premier réseau (10) et ledit deuxième réseau (12), et **en ce que** ledit deuxième processeur local (22) est connecté à ladite ligne de réception (RX) de ladite deuxième interface de bus (18) et uniquement à ladite ligne d'émission (TX) de ladite première interface de bus (16) pour exclusivement transférer des messages reçus sur ladite ligne de réception (RX) de ladite deuxième interface de bus (18) vers ladite ligne d'émission (TX) de ladite première interface de bus (16) de sorte à assurer une fonction de deuxième passerelle unidirectionnelle entre ledit deuxième réseau (12) et ledit premier réseau (10).

15. Dispositif selon l'une quelconque des revendications précédentes, **caractérisé en ce que** le premier et le deuxième réseau de communication sont choisis parmi l'un d'un réseau CAN, LIN ou Ethernet automobile.

## Patentansprüche

1. Gateway-Vorrichtung (14), die geeignet ist, einen ersten Bus eines ersten Kommunikationsnetzwerks (10) eines Kraftfahrzeugs und einen zweiten Bus eines zweiten Kommunikationsnetzwerks (12) des Kraftfahrzeugs miteinander zu verbinden, wobei die zwei Kommunikationsnetzwerke (10, 12) zwei redundante Kommunikationsnetzwerke sind, die Gateway-Vorrichtung umfassend eine erste Busschnittstelle (16), die mit dem ersten Bus gekoppelt ist, umfassend eine Empfangsleitung (RX) und eine Sendeleitung (TX), um Meldungen von dem ersten Bus zu empfangen bzw. an diesen zu senden, und eine zweite Busschnittstelle (18), die mit dem zweiten Bus gekoppelt ist, umfassend eine Empfangsleitung (RX) und eine Sendeleitung (TX), um Meldungen von dem zweiten Bus zu empfangen bzw. an diesen zu senden, einen ersten lokalen Prozessor (20), der mit den zwei Busschnittstellen verbunden ist, wobei der erste lokale Prozessor ausschließlich dafür ausgelegt ist, Meldungen, die auf der Empfangsleitung (RX) der ersten Busschnittstelle (16) empfangen werden, zu der Sendeleitung (TX) der zweiten Busschnittstelle (18) zu übertragen, um eine Funktion eines ersten unidirektionalen Gateways zwischen dem ersten Netzwerk (10) und dem zweiten Netzwerk (12) sicherzustellen, und einen zweiten lokalen Prozessor (22), der von dem ersten lokalen Prozessor (20) unabhängig ist, wobei der zweite lokale Prozessor (22) ausschließlich dafür ausgelegt ist, Meldungen, die auf der Empfangsleitung (RX) der zweiten Busschnittstelle (18) empfangen werden, zu der Sendeleitung (TX) der ersten Busschnittstelle (16) zu übertragen, um eine Funktion eines zweiten unidirektionalen Gateways zwischen dem zweiten Netzwerk (12) und dem ersten Netzwerk (10) sicherzustellen.

2. Vorrichtung nach Anspruch 1, **dadurch gekennzeichnet, dass** die erste Busschnittstelle (16) eine erste Busschnittstellen-Schaltung (16.1), die über ihre einzelne Empfangsleitung mit dem ersten lokalen Prozessor (20) verbunden ist, um einzig im Empfangsmodus genutzt werden zu können, und eine zweite Busschnittstellen-Schaltung (16.2), die zumindest über ihre Sendeleitung mit dem zweiten lokalen Prozessor (22) verbunden ist, umfasst.

3. Vorrichtung nach Anspruch 2, **dadurch gekennzeichnet, dass** die zweite Busschnittstellen-Schaltung (16.2) der ersten Busschnittstelle (16) über ihre einzelne Sendeleitung mit dem zweiten lokalen Prozessor (22) verbunden ist, um einzig im Sendemodus genutzt werden zu können.

4. Vorrichtung nach Anspruch 2, **dadurch gekennzeichnet, dass** die zweite Busschnittstellen-Schaltung (16.2) der ersten Busschnittstelle (16) über ihre Sendeleitung und ihre Empfangsleitung mit dem zweiten lokalen Prozessor (22) verbunden ist, um im Sendemodus und im Empfangsmodus genutzt werden zu können.

5. Vorrichtung nach Anspruch 1 oder 2, **dadurch gekennzeichnet, dass** die zweite Busschnittstelle (18) eine erste Busschnittstellen-Schaltung (18.1), die zumindest über ihre Sendeleitung mit dem ersten lokalen Prozessor (20) verbunden ist, und eine zweite Busschnittstellen-Schaltung (18.2), die über ihre einzelne Empfangsleitung mit dem zweiten lokalen Prozessor (22) verbunden ist, um einzig im Empfangsmodus genutzt zu werden, umfasst.

6. Vorrichtung nach Anspruch 5, **dadurch gekennzeichnet, dass** die erste Busschnittstellen-Schaltung (18.1) der zweiten Busschnittstelle (18) über ihre einzelne Sendeleitung mit dem ersten lokalen Prozessor (20) verbunden ist, um einzig im Sendemodus genutzt werden zu können.

7. Vorrichtung nach Anspruch 5, **dadurch gekennzeichnet, dass** die erste Busschnittstellen-Schaltung (18.1) der zweiten Busschnittstelle (18) über ihre Sendeleitung und ihre Empfangsleitung mit dem ersten lokalen Prozessor (20) verbunden ist, um im Sendemodus und im Empfangsmodus genutzt werden zu können.

8. Vorrichtung nach Anspruch 1, **dadurch gekennzeichnet, dass** die erste Busschnittstelle (16) von einer einzigen Busschnittstellen-Schaltung (16.0) gebildet ist, wobei die Empfangsleitung der ersten Busschnittstelle zumindest mit dem ersten lokalen Prozessor (20) verbunden ist und die Sendeleitung der ersten Busschnittstelle nur mit dem zweiten lokalen Prozessor (22) verbunden ist.

9. Vorrichtung nach Anspruch 8, **dadurch gekennzeichnet, dass** die einzige Busschnittstellen-Schaltung (16.0) der ersten Busschnittstelle (16) über ihre einzelne Sendeleitung mit dem zweiten lokalen Prozessor (22) verbunden ist, um einzig im Sendemodus genutzt werden zu können.

10. Vorrichtung nach Anspruch 8, **dadurch gekennzeichnet, dass** die einzige Busschnittstellen-Schaltung (16.0) der ersten Busschnittstelle (16) über ihre Sendeleitung und ihre Empfangsleitung mit dem zweiten lokalen Prozessor (22) verbunden ist, um im Sendemodus und im Empfangsmodus genutzt werden zu können.

11. Vorrichtung nach Anspruch 1 oder 8, **dadurch gekennzeichnet, dass** die zweite Busschnittstelle (18) von einer einzigen Busschnittstellen-Schaltung (18.0) gebildet ist, wobei die Empfangsleitung der zweiten Busschnittstelle zumindest mit dem zweiten lokalen Prozessor (22) verbunden ist und die Sendeleitung der zweiten Busschnittstelle nur mit dem ersten lokalen Prozessor (20) verbunden ist.

12. Vorrichtung nach Anspruch 11, **dadurch gekennzeichnet, dass** die einzige Busschnittstellen-Schaltung (18.0) der zweiten Busschnittstelle (18) über ihre einzelne Sendeleitung mit dem ersten lokalen Prozessor (20) verbunden ist, um einzig im Sendemodus genutzt werden zu können.

13. Vorrichtung nach Anspruch 11, **dadurch gekennzeichnet, dass** die einzige Busschnittstellen-Schaltung (18.0) der zweiten Busschnittstelle (18) über ihre Sendeleitung und ihre Empfangsleitung mit dem ersten lokalen Prozessor (20) verbunden ist, um im Sendemodus und im Empfangsmodus genutzt werden zu können.

14. Vorrichtung nach Anspruch 1, **dadurch gekennzeichnet, dass** der erste lokale Prozessor (20) mit der Empfangsleitung (RX) der ersten Busschnittstelle (16) und einzig mit der Sendeleitung (TX) der zweiten Busschnittstelle (18) verbunden ist, um ausschließlich Meldungen, die auf der Empfangsleitung (RX) der ersten Busschnittstelle (16) empfangen werden, zu der Sendeleitung (TX) der zweiten Busschnittstelle (18) zu übertragen, um eine Funktion eines ersten unidirektionalen Gateways zwischen dem ersten Netzwerk (10) und dem zweiten Netzwerk (12) sicherzustellen, und dadurch, dass der zweite lokale Prozessor (22) mit der Empfangsleitung (RX) der zweiten Busschnittstelle (18) und einzig mit der Sendeleitung (TX) der ersten Busschnittstelle (16) verbunden ist, um ausschließlich Meldungen, die auf der Empfangsleitung (RX) der zweiten Busschnittstelle (18) empfangen werden, zu der Sendeleitung (TX) der ersten Busschnittstelle (16) zu übertragen, um eine Funktion eines zweiten unidirektionalen Gateways zwischen dem zweiten Netzwerk (12) und dem ersten Netzwerk (10) sicherzustellen.

15. Vorrichtung nach einem der vorhergehenden Ansprüche, **dadurch gekennzeichnet, dass** das erste und das zweite Kommunikationsnetzwerk aus einem von einem Automotive- CAN-, LIN- oder Ethernet-Netzwerk ausgewählt sind.

## Claims

1. Gateway device (14) capable of interconnecting a first bus of a first communication network (10) of a motor vehicle and a second bus of a second communication network (12) of the motor vehicle, the two communication networks (10, 12) being two communication networks provided with redundancy, said gateway device comprising a first bus interface (16), which is coupled to said first bus and comprises a reception line (RX) and a transmission line (TX) for receiving messages from said first bus and transmitting messages to said first bus, respectively, and a second bus interface (18), which is coupled to said second bus and comprises a reception line (RX) and a transmission line (TX) for receiving messages from said second bus and transmitting messages to said second bus, respectively, a first local processor (20), which is connected to said two bus interfaces, said first local processor being designed exclusively to transfer messages received over said reception line (RX) of said first bus interface (16) to said transmission line (TX) of said second bus interface (18) so as to act as a first unidirectional gateway between said first network (10) and said second network (12), and a second local processor (22), which is independent of said first local processor (20), said second local processor (22) being designed exclusively to transfer messages received over said reception line (RX) of said second bus interface (18) to said transmission line (TX) of said first bus interface (16) so as to act as a second unidirectional gateway between said second network (12) and said first network (10).

2. Device according to Claim 1, **characterized in that** said first bus interface (16) comprises a first bus interface circuit (16.1), which is connected to said first local processor (20) via its reception line alone so as to be able to be used only in reception mode, and a second bus interface circuit (16.2), which is connected to said second local processor (22) at least via its transmission line.

3. Device according to Claim 2, **characterized in that** said second bus interface circuit (16.2) of said first bus interface (16) is connected to said second local processor (22) via its transmission line alone so as to be able to be used only in transmission mode.

4. Device according to Claim 2, **characterized in that** said second bus interface circuit (16.2) of said first bus interface (16) is connected to said second local processor (22) via its transmission line and its reception line so as to be able to be used in transmission mode and in reception mode.

5. Device according to Claim 1 or 2, **characterized in that** said second bus interface (18) comprises a first bus interface circuit (18.1), which is connected to said first local processor (20) at least via its transmission line, and a second bus interface circuit (18.2), which is connected to said second local processor (22) via its reception line alone so as to be able to be used only in reception mode.

6. Device according to Claim 5, **characterized in that** said first bus interface circuit (18.1) of said second bus interface (18) is connected to said first local processor (20) via its transmission line alone so as to be able to be used only in transmission mode.

7. Device according to Claim 5, **characterized in that** said first bus interface circuit (18.1) of said second bus interface (18) is connected to said first local processor (20) via its transmission line and its reception line so as to be able to be used in transmission mode and in reception mode.

8. Device according to Claim 1, **characterized in that** said first bus interface (16) consists of a single bus interface circuit (16.0), said reception line of said first bus interface being connected at least to said first local processor (20), and said transmission line of said first bus interface being connected only to said second local processor (22).

9. Device according to Claim 8, **characterized in that** said single bus interface circuit (16.0) of said first bus interface (16) is connected to said second local processor (22) via its transmission line alone so as to be able to be used only in transmission mode.

10. Device according to Claim 8, **characterized in that** said single bus interface circuit (16.0) of said first bus interface (16) is connected to said second local processor (22) via its transmission line and its reception line so as to be able to be used in transmission mode and in reception mode.

11. Device according to Claim 1 or 8, **characterized in that** said second bus interface (18) consists of a single bus interface circuit (18.0), said reception line of said second bus interface being connected at least to said second local processor (22), and said transmission line of said second bus interface being connected only to said first local processor (20).

12. Device according to Claim 11, **characterized in that** said single bus interface circuit (18.0) of said second bus interface (18) is connected to said first local processor (20) via its transmission line alone so as to be able to be used only in transmission mode.

13. Device according to Claim 11, **characterized in that** said single bus interface circuit (18.0) of said second bus interface (18) is connected to said first local processor (20) via its transmission line and its reception line so as to be able to be used in transmission mode and in reception mode.

14. Device according to Claim 1, **characterized in that** said first local processor (20) is connected to said reception line (RX) of said first bus interface (16) and only to said transmission line (TX) of said second bus interface (18) in order to exclusively transfer messages received over said reception line (RX) of said first bus interface (16) to said transmission line (TX) of said second bus interface (18) so as to act as a first unidirectional gateway between said first network (10) and said second network (12), and **in that** said second local processor (22) is connected to said reception line (RX) of said second bus interface (18) and only to said transmission line (TX) of said first bus interface (16) in order to exclusively transfer messages received over said reception line (RX) of said second bus interface (18) to said transmission line (TX) of said first bus interface (16) so as to act as a second unidirectional gateway between said second network (12) and said first network (10).

15. Device according to any one of the preceding claims, **characterized in that** the first and second communication networks are chosen from one of the following: an automotive Ethernet, LIN or CAN network.
